(19) Europäisches Patentamt

European Patent Office

Office européen des brevets

(11) EP 2 845 065 B1

## (12) EUROPEAN PATENT SPECIFICATION

(45) Date of publication and mention
of the grant of the patent:
**18.09.2019 Bulletin 2019/38**

(21) Application number: **13720929.2**

(22) Date of filing: **03.05.2013**

(51) Int Cl.:
**G05B 19/423** *(2006.01)*

(86) International application number:
**PCT/EP2013/059298**

(87) International publication number:
**WO 2013/164470 (07.11.2013 Gazette 2013/45)**

(54) **IMITATION LEARNING METHOD FOR A MULTI-AXIS MANIPULATOR**

IMITATIONSLERNVERFAHREN FÜR EINEN MEHRACHSIGEN MANIPULATOR

PROCÉDÉ D'APPRENTISSAGE PAR IMITATION POUR MANIPULATEUR MULTIAXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2012 EP 12166888**

(43) Date of publication of application:
**11.03.2015 Bulletin 2015/11**

(73) Proprietor: **LEONI CIA CABLE SYSTEMS SAS
28630 Gellainville (FR)**

(72) Inventors:
• **CHEMOUNY, Jérôme**
**F-78470 Saint Remy Les Chevreuse (FR)**
• **CLERAMBAULT, Stéphane**
**F-91940 Gometz-le-chatel (FR)**
• **PINAULT, Samuel**
**F-78460 Chevreuse (FR)**

(74) Representative: **Calvo de Nó, Rodrigo et al
Cabinet Beau de Loménie
158, rue de l'Université
75340 Paris Cedex 07 (FR)**

(56) References cited:
**EP-A2- 2 361 735       WO-A1-2009/096408
US-A- 5 737 500**

• **YEASIN M ET AL: "Automatic robot programming
by visual demonstration of task execution",
ADVANCED ROBOTICS, 1997. ICAR '97.
PROCEEDINGS., 8TH INTERNATIONAL CON
FERENCE ON MONTEREY, CA, USA 7-9 JULY
1997, NEW YORK, NY, USA,IEEE, US, 7 July 1997
(1997-07-07), pages 913-918, XP010244118, DOI:
10.1109/ICAR.1997.620290 ISBN:
978-0-7803-4160-9**

**Description**

TECHNICAL FIELD

The disclosure relates to an imitation learning method, as well as to a computer program for implementing such a method, a computer device programmed so as to implement this method, and a robotic system comprising such a computer device and a multi-axis manipulator.

BACKGROUND

In the present context, "imitation learning", also known as "learning by demonstration" or "programming by demonstration", refers to methods allowing a robotic system to learn a set of actions by having them performed by an operator, so as to replicate them. Such imitation learning methods may be applied in a large variety of fields including, for instance, industrial or medical robotics. They may not just be used to program a robotic system for later replication of the actions of the human operator, but also for remote operation purposes, where one or several remote multi-axis manipulators replicate the actions of the human operator in real time. An example of an imitation learning method was disclosed by M. Yeasin and S. Chaudhuri in "Automatic Robot Programming by visual Demonstration of Task Execution", ICAR 97 Proceedings.

Imitation learning methods facilitate the programming of a robotic system, and in particular of a robotic system comprising at least one multi-axis manipulator, and this even by operators without particular programming skills. Instead, the manual dexterity of the programming manipulator becomes crucial in ensuring a smooth, efficient motion to be replicated by the robotic system.

Nevertheless, even the most skilled human operator may be unable to achieve the smoothness and accuracy that can be achieved by a robotic system. Exact replication of the actions of a human operator will thus limit the potential of the robotic system to improve on the dexterity of the human operator. An example of a method for optimizing the trajectory of such a robotic system was disclosed in EP 2 361 735 A2.

**SUMMARY**

The invention is defined by the independent claims. Preferred embodiments of the invention are described in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

Consequently, a first object of the present disclosure is that of providing an imitation learning method whereby a multi-axis manipulator which is infinitely redundant in a Cartesian space can learn to perform a set of operation with even higher accuracy and efficiency than a human user whose operations are to be replicated.

Accordingly, in at least one illustrative embodiment, this imitation learning method comprises at least the steps of:

- capturing, at a set of successive waypoints in a teach-in trajectory of a user-operated training tool, spatial data comprising position and orientation of the training tool in said Cartesian space ;
- selecting, from among said set of successive waypoints, a subset of waypoints starting from a first point of said set of successive waypoints, wherein for each subsequent waypoint to be selected a difference in position and/or orientation with respect to a last previously selected waypoint exceeds a predetermined threshold ;
- fitting a set trajectory in said Cartesian space to said selected subset of waypoints ; and
- converting said set trajectory into motion commands in a joint space of said multi-axis manipulator.

The capture step provides the input of spatial data corresponding to the operation of the training tool by the user. However, thanks to the subsequent waypoint selection step, it is possible to filter, from the teach-in trajectory, small user hesitations and deviations, thus resulting in a smoother set trajectory on whose basis the motion commands for the individual joints of the multi-axis manipulator will then be obtained. Said motion commands may be transmitted to a multi-axis manipulator in real time, for the remote operation of said multi-axis manipulator through the user-operated training tool. Alternatively or complementarily to this transmission, however, these motion commands may be stored for subsequent input to a multi-axis manipulator.

The conversion step comprises the calculation of an optimal path of redundant joint positions maximizing Yoshikawa index values for the multi-axis manipulator along the set trajectory. In this context, "redundant joint position" is understood as meaning a positional value in the joint space axis corresponding to a redundant joint. If the redundant joint is a rotating joint, this redundant joint position will have an angular value. By determining a position for each redundant joint, it is possible to solve the positions of the remaining joints. To each position vector of the multi-axis manipulator in joint space corresponds a Jacobian matrix which is the transformation matrix from joint speed vector to the speed vector of an end-effector of the multi-axis manipulator in Cartesian space. The Yoshikawa index is a manipulability index defined as the square root of the determinant of the product of this Jacobian matrix and its transverse. Maximizing the Yoshikawa index increases the accuracy of the multi-axis manipulator while reducing the joint speeds during its motion.

The calculation of said redundant joint trajectory comprises the steps of:

- selecting a plurality of alternative redundant joint starting positions for a first point in said set trajectory ;
- calculating, for each one of said alternative initial redundant joint positions, a path of successive redundant joint positions by selecting, for each successive point in the set trajectory, the redundant joint position resulting in the highest Yoshikawa index value for the multi-axis manipulator and complying with predetermined speed and/or acceleration limits with respect to the previous redundant joint position in the same path of successive redundant joint positions ;
- interpolating, between said paths of successive redundant joint positions, a plurality of polynomial redundant joint trajectories ; and
- extracting said optimal path from redundant joint positions in said plurality of polynomial redundant joint trajectories, for example by using an optimization algorithm. This optimization algorithm may be in particular a least-squares algorithm such as, for example, the Nelder-Mead algorithm, a genetic algorithm or a neural network such as, for example, a multilayer neural network.

In order to ensure the quality of the optimal path, it may be subsequently validated using an accuracy index corresponding to a ratio of Cartesian space to joint space variation along said optimal path and/or an energy index corresponding to joint speeds in joint space along said optimal path.

The abovementioned spatial data comprising position and orientation of the training tool in the Cartesian space may be captured through an optical sensor and in particular a stereoscopic sensor, although other optical sensors suitable for capturing tridimensional positional data, such as for instance time-of-flight sensors, may alternatively be used.

In order to identify both position and orientation of the training tool with such an optical sensor, said user-operated training tool may carry at least a first marker and two additional markers spaced along different axes from said first marker. To ensure redundancy, so that both position and orientation of the learning can be identified even in low visibility conditions, a set of markers may be used comprising four markers of which no more than two are co-linear.

Alternatively to the use of an optical sensor, however, said user-operated training tool may be carried by a multi-axis manipulator, a manual operation of said user-operated training tool being servo-assisted by the multi-axis manipulator carrying the user-operated training tool, and said spatial data being captured through joint position sensors of the multi-axis manipulator carrying the user-operated training tool. For said servo-assistance, user force inputs may for instance be sensed by force sensors at the training tool and converted into joint actuator commands for the multi-axis manipulator carrying the user-operated training tool.

The disclosed imitation-learning method may in particular be computer-implemented. Consequently, the present disclosure also relates to a computer program for implementing such an imitation learning method, to a computer-readable data storage medium containing an instruction set for implementing such an imitation learning method, to a computing device programmed with an instruction set for carrying out such an imitation learning method, and to a robotic system comprising such a computing device and a multi-axis manipulator connected to it for its control.

The above summary of some example embodiments is not intended to describe each disclosed embodiment or every implementation of the invention. In particular, selected features of any illustrative embodiment within this specification may be incorporated into an additional embodiment unless clearly stated to the contrary.

BRIEF DESCRIPTION OF THE DRAWINGS

The invention may be more completely understood in consideration of the following detailed description of various embodiments in connection with the accompanying drawings, in which :

- FIGS. 1A and 1B illustrate, respectively, the manual operation of a user-operated training tool, and the subsequent replication of this operation by a six-axis manipulator following an imitation learning method;
- FIG. 2 illustrates a set of four visual markers mounted on the user-operated training tool of FIGS. 1A and 1B for tracking with an optical sensor;
- FIG. 3 illustrates the manual operation of a user-operated training tool, and the real-time replication of this operation by several six-axis manipulators following an imitation learning method;
- FIG. 4 illustrates, respectively, the manual operation of a user-operated training tool carried by a six-axis manipulator, for a subsequent or real-time replication of this operation by the same or another multi-axis manipulator following an imitation learning method;

- FIG. 5 is a flowchart illustrating the selection of waypoints in the trajectory of the user-operated training tool;
- FIGS. 6A and 6B illustrate the transition from the trajectory of the user-operated training tool to a smoother set trajectory for a replicating multi-axis manipulator;
- FIG. 7 illustrates an infinitely redundant seven-axis manipulator;
- FIG. 8 is a flowchart illustrating the conversion of a set trajectory into motion commands for the joints of an infinitely redundant multi-axis manipulator ;
- FIG. 9A is a graph illustrating the evolution of the Yoshikawa index over time for several different alternative paths of successive redundant joint positions for a given end-effector set trajectory for an infinitely redundant multi-axis manipulator, each path having a different first redundant joint position, as well as for a plurality of polynomial redundant joint trajectories interpolated from said paths; and
- FIG. 9B is a graph highlighting an optimal path extracted from the plurality of polynomial joint trajectories of FIG. 9A.

While the invention is amenable to various modifications and alternative forms, specifics thereof have been shown by way of example in the drawings and will be described in detail. It should be understood, however, that the intention is not to limit aspects of the invention to the particular embodiments described.

DETAILED DESCRIPTION

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

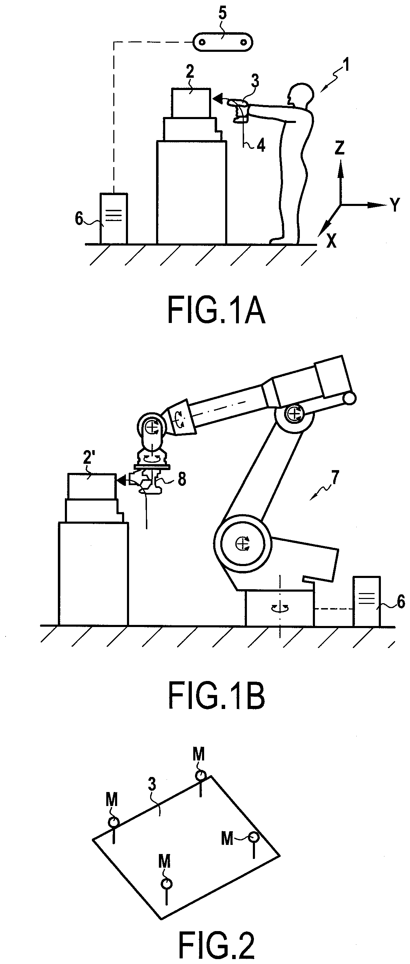

Imitation learning is known to be a useful and particularly user-friendly technique for programming complex operations in multi-axis manipulators. Figs. 1A and 1B illustrate a first example of such an imitation learning technique in which a human operator 1 first performs a complex operation on a workpiece 2 using a teaching tool 3, whose trajectory 4 during this operation is tracked by a sensor 5 and stored in a data storage unit within a computing device 6 connected to said sensor 5, as shown in Fig. 1A. In particular, sensor 5 captures spatial data comprising the position and orientation of teaching tool 3, at waypoints spaced by regular time intervals during this operation, in a Cartesian space with three orthogonal reference axes X,Y,Z. For this, the teaching tool 3 may in particular carry at least three, preferably four markers, offset from each other in at least two different axes, whose individual positions can be identified by sensor 5. Of these three, preferably four markers, no more than two are co-linear, so that the orientation of the teaching tool 3 in said Cartesian space can be inferred from the relative positions of the markers. Fig. 2 illustrates an example of such a set of four markers M mounted on a surface of teaching tool 3 in a quadrangular configuration.

Sensor 5 may in particular be an optical sensor, and more specifically a stereoscopic sensor, generating two laterally offset images whose parallax can then be used to infer depth data. However, various other types of sensors suitable for providing three-dimensional position data may be considered, such as for instance so-called time-of-flight sensors.

As shown in Fig. 1B, the spatial data stored in computing device 6 can then be processed to generate motion commands for a multi-axis manipulator 7 to replicate trajectory 4 with a working tool 8 carried at its end-effector, in order to reproduce the same operation on workpiece 2'. In the particular embodiment illustrated in Fig. 1B, the multi-axis manipulator 7 is a six-axis manipulator with six rotating joints. However, the same method may be analogously applied with manipulators having different numbers or types of joints, including both rotating and/or linear joints.

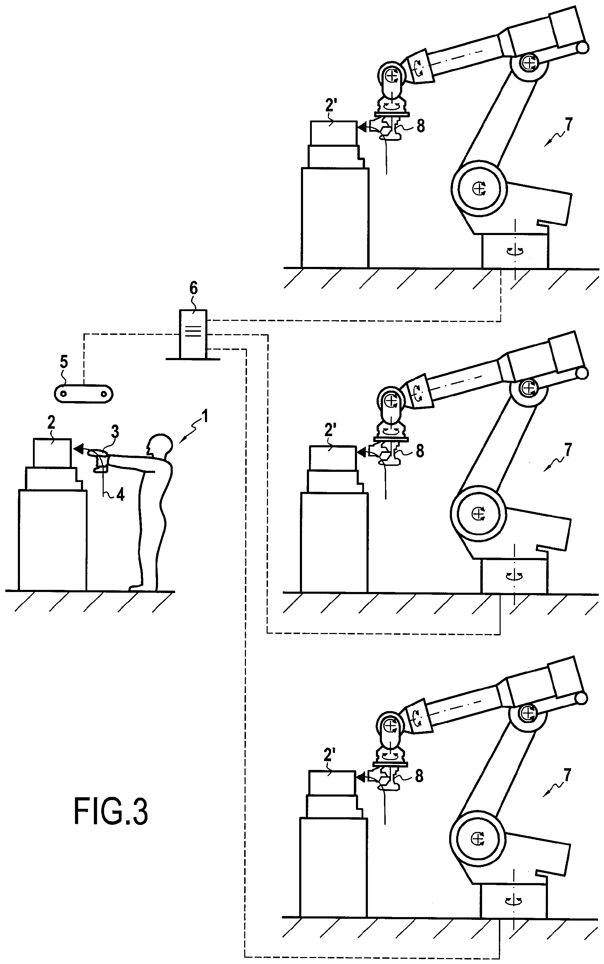

While in the first example illustrated in Figs. 1A and 1B the imitation learning method is used to programme the robotic system 9 formed by computing device 6 and multi-axis manipulator 7 for a subsequent replication of the operations carried out by the human operator, such an imitation learning method may also be used for real-time remote control of one or several multi-axis manipulators 7 operating simultaneously or near-simultaneously to the human operator 1, as shown in the embodiment illustrated in Fig. 3. In this second example, the incoming spatial data from sensor 5 are processed in real time to produce the motion commands transmitted to all three multi-axis manipulators 7 connected to computing device 6.

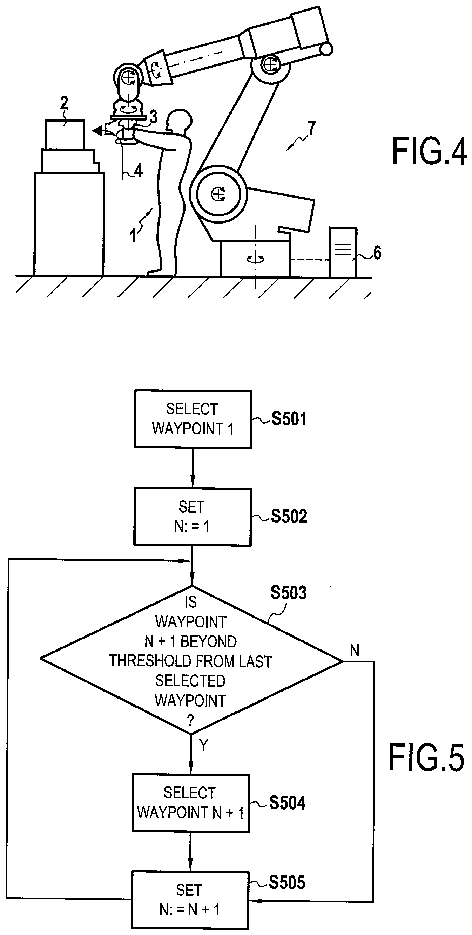

While an optical sensor 5 is used in both the first and second illustrated examples, alternative arrangements may also be used to capture the position and orientation of a user-operated teaching tool 3. In the third embodiment illustrated in Fig. 4, teaching tool 3, while held by the human operator 1, is already mounted on the end-effector of multi-axis manipulator 7. Force sensors installed in teaching tool 3 receive force inputs from the human operator 1, and transmit them to the computing device 6 which issues corresponding commands to actuators in the joints of multi-axis manipulator 7 in order to servo-assist the operations of the human operator 7. Simultaneously, joint position sensors in each joint of multi-axis manipulator 7 transmit the position of each joint in joint space to computing device 6, which processes these data using the direct kinematic model of the multi-axis manipulator 7 to infer spatial data including position and orientation of user-operated teaching tool 3 in Cartesian space. As in the previous examples, these spatial data can then be processed by computing device 6 to generate motion commands for the same or another multi-axis manipulator 7 to replicate the teach-in trajectory 4 of teaching tool 3, either subsequently or in real time.

In each example, the computing device may be a conventional programmable computer running a computer program implementing these methods. This computer program may be in the shape of a set of instructions stored in a memory carrier. In the present context, "memory carrier" and "data storage medium" should be understood as meaning any physical medium capable of containing data readable by a reading device for at least a certain period of time. Examples of such memory carriers are magnetic tapes and discs, optical discs (read-only as well as recordable or re-writable), logical circuit memories, such as read-only memory chips, random-access memory chips and flash memory chips, and even more exotic data storage media, such as chemical, biochemical or mechanical memories.

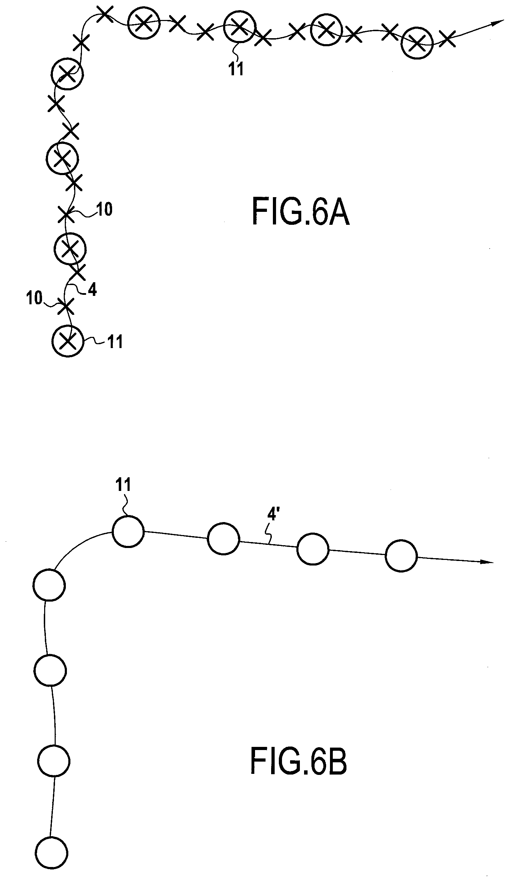

Even a highly-skilled, highly-dexterous human operator will be unable to suppress some tremor and hesitation during his operation. Fig. 5 illustrates a waypoint selection routine aimed at filtering this operator-induced noise in the spatial data while replicating as much as possible the accuracy of his operations. In a first step S501 is this routine, a first waypoint in teach-in trajectory 4 is selected. In the next step S502, the value of a counter n is set to 1. It is then checked, in step S503, whether a distance from the last selected waypoint to the next waypoint, that is, waypoint n+1, is beyond a predetermined threshold. This distance may be a distance along a single axis in abovementioned Cartesian space, an absolute distance in a two-dimensional plane in said Cartesian space, or an absolute distance in said Cartesian space. Different thresholds may also be used for different axes or planes in said Cartesian space. If waypoint n+1 is indeed beyond that threshold from the last selected waypoint, it is then also selected in step S504 before adding one unit to counter n in step S505 and jumping back to step S503. If waypoint n+1 is not beyond that threshold from the last selected waypoint, the routine goes directly from step S503 to step S505 without selecting waypoint n+1. The result of this routine is illustrated on Figs. 6A and 6B. Fig. 5A shows a teach-in trajectory 4 and waypoints 10, 11 corresponding to training tool spatial data captured at regular time intervals along said teach-in trajectory 4. Following the selection routine, only waypoints 11 are selected, on which a smoother set trajectory 4' can then be fitted. This waypoint selection routine offers a trade-off between accuracy and motion smoothness. Increasing the selection threshold will reduce the accuracy while increasing the smoothness of set trajectory 4'.

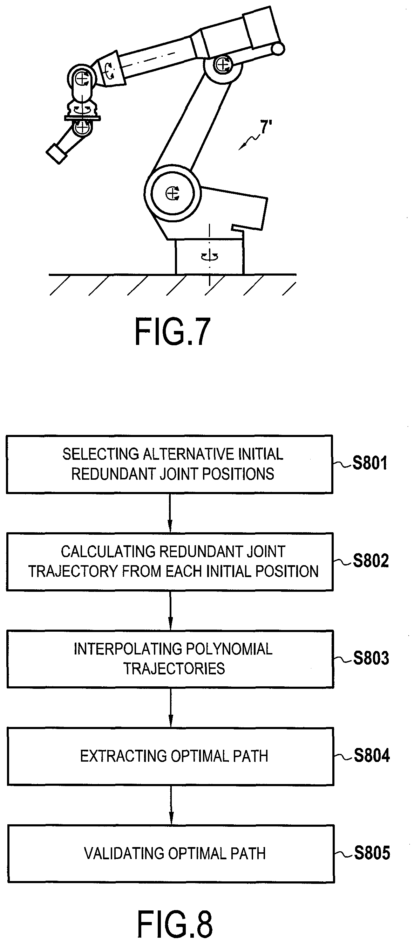

In a three-dimensional Cartesian space, a six-axis manipulator, such as those illustrated in Figs. 1A,1B, 3 and 4, is finitely redundant, that is, offers only a finite number of solutions in joint space for a given end-effector position and orientation in the Cartesian space. Consequently, the step of converting a set trajectory for the end-effector in Cartesian space into motion commands in joint space can be carried out using an inverse kinematic model of the six-axis manipulator and well-known singularity avoidance algorithms, relying for instance on the Yoshikawa index, on singularity avoidance by angular velocity inputs, or on the damped least-squares method. With at least one additional joint, however, like the seven-axis manipulator 7' illustrated in Fig. 7, the manipulator becomes infinitely redundant, offering an infinite number of solutions in joint space for a given end-effector position and orientation in the Cartesian space. With this infinite number of solutions, it becomes possible to select those offering optimal manipulability, increasing accuracy and decreasing energy requirements.

A suitable indicator of the manipulability of a multi-axis manipulator is the Yoshikawa index $\mu$, defined by the equation:

$$\mu = \sqrt{\det(J \cdot J^T)}$$

wherein J is the Jacobian matrix of the multi-axis manipulator, that is, the matrix determining the relationship between end-effector velocities $\dot{X}$ in the Cartesian space and joint velocities $\dot{q}$ in joint space, according to the equation:

$$\dot{X} = J * \dot{q}$$

For example, with a seven-axis manipulator with seven serially arranged rotational joints, this equation can be expressed as:

$$\begin{pmatrix} \dot{x} \\ \dot{y} \\ \dot{z} \\ \dot{\alpha} \\ \dot{\beta} \\ \dot{\gamma} \end{pmatrix} = J * \begin{pmatrix} \dot{\theta}_1 \\ \dot{\theta}_2 \\ \dot{\theta}_3 \\ \dot{\theta}_4 \\ \dot{\theta}_5 \\ \dot{\theta}_6 \\ \dot{\theta}_7 \end{pmatrix}$$

wherein $\dot{x}$, $\dot{y}$ and $\dot{z}$ are linear speeds of the end-effector in three orthogonal axes in the Cartesian space, $\dot{\alpha}$, $\dot{\beta}$ and $\dot{\gamma}$ are angular speeds of the end-effector around three orthogonal axes in the Cartesian space, and $\dot{\theta}_1$ to $\dot{\theta}_7$ are angular speeds of each one of the seven rotational joints around their respective rotation axes.

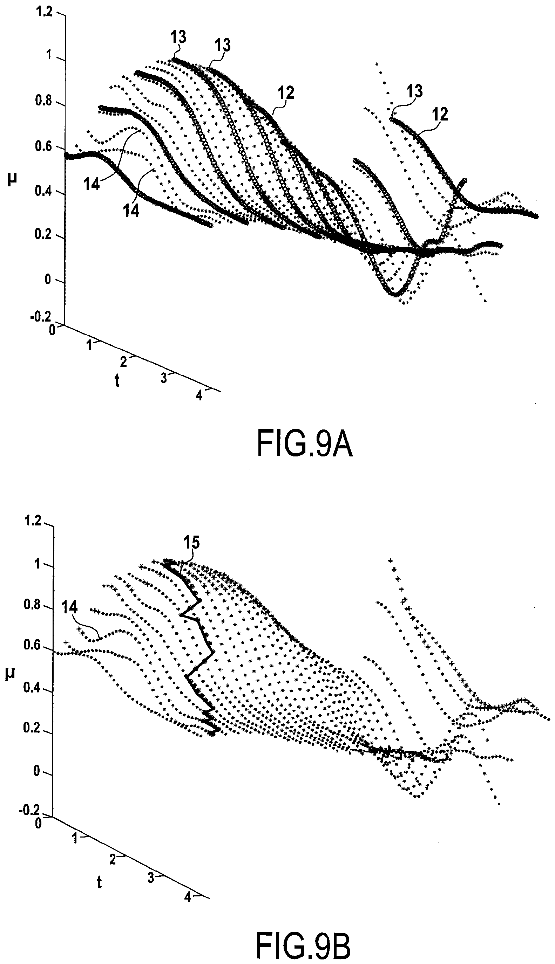

Fig. 8 illustrates a process suitable for providing and validating an optimal path of redundant joint positions in an infinitely redundant manipulator which maximizes Yoshikawa index values along the set trajectory for the end-effector. In a first step S801 in this process, several alternative initial redundant joint positions are selected. This selection may combine randomly or semi-randomly selected initial redundant joint positions with initial redundant joint positions offering a comparatively high value of the Yoshikawa index $\mu$. In the next step S802, a path of successive redundant joint positions is calculated for each initial redundant joint position by selecting, for each successive waypoint in the set trajectory, the redundant joint position resulting in the highest Yoshikawa index value for the multi-axis manipulator and complying with predetermined speed and/or acceleration limits with respect to the previous redundant joint position in the same path of successive redundant joint positions. Fig. 9A illustrates an example showing the evolution over time t of the Yoshikawa index $\mu$ for a plurality of paths 12 of redundant joint positions, each one starting from a different initial redundant joint position 13 at t=0. In the next step S803, a plurality of polynomial trajectories 14, also reflected in Fig. 9A, is interpolated between the paths 12. From the redundant joint positions in these polynomial trajectories 13 it is then possible in step S804 to extract an optimal path 15 maximizing the value of the Yoshikawa index $\mu$ along the entire set trajectory, as shown in Fig. 9B, by using one of several alternative approaches.

In a second, alternative approach, the optimal path 15 is extracted by using an optimization algorithm to optimize the coefficients of a linearized polynomial redundant joint trajectory maximizing the value of the Yoshikawa index $\mu$. In particular, a least-squares optimization algorithm such as the Nelder-Mead algorithm may be used, although other alternative optimization algorithms, like for example a genetic algorithm, or a neural network, such as a multilayer perceptron neural network, may also be considered.

The resulting optimal path 15 for the redundant joint in joint space may then be validated in step S805 using an accuracy and/or an energy index calculated over the whole path. For each position, the accuracy index $C_{accuracy}$ corresponds to a relationship between positional change of the manipulator end-effector in Cartesian space and corresponding changes of the joint positions in joint space. The direct kinematic model of a seven-axis manipulator with seven serial rotational joints can be expressed as a matrix $T_{1,7}$ fulfilling the equation:

$$\begin{pmatrix} x \\ y \\ z \\ \alpha \\ \beta \\ \gamma \end{pmatrix} = T_{1,7} * \begin{pmatrix} \theta_1 \\ \theta_2 \\ \theta_3 \\ \theta_4 \\ \theta_5 \\ \theta_6 \\ \theta_7 \end{pmatrix}$$

wherein $x$, $y$ and $z$ are the positions of the manipulator end-effector in the three orthogonal axes of the Cartesian space, $\alpha$, $\beta$ and $\gamma$ are orientation angles of the manipulator end-effector around respective orthogonal axes of the Cartesian space and $\theta_1$ to $\theta_7$ are angular positions of each one of the seven rotational joints around their respective rotation axes. Using this direct kinematic model $T_{1,7}$ it is also possible to determine the effect on the position and orientation of the end-effector of small variations in the joint angles. Thus, for a position in joint space, with given joint angles $\theta_1$ to $\theta_7$, it is possible to calculate an error vector $\Delta X$ according to the following equation:

$$\Delta X = \begin{pmatrix} \Delta x \\ \Delta y \\ \Delta z \\ \Delta \alpha \\ \Delta \beta \\ \Delta \gamma \end{pmatrix} = \sum_{p=1}^{P} \sum_{r=1}^{R} \sum_{s=1}^{S} \sum_{t=1}^{T} \sum_{u=1}^{U} \sum_{v=1}^{V} \sum_{w=1}^{W} \left[ T_{1,7} * \begin{pmatrix} \theta_1 \\ \theta_2 \\ \theta_3 \\ \theta_4 \\ \theta_5 \\ \theta_6 \\ \theta_7 \end{pmatrix} - T_{1,7} * \begin{pmatrix} \theta_1 + \Delta\theta_{1,p} \\ \theta_2 + \Delta\theta_{2,r} \\ \theta_3 + \Delta\theta_{3,s} \\ \theta_4 + \Delta\theta_{4,t} \\ \theta_5 + \Delta\theta_{5,u} \\ \theta_6 + \Delta\theta_{6,v} \\ \theta_7 + \Delta\theta_{7,w} \end{pmatrix} \right]$$

wherein $\Delta\theta_{i,j}$ correspond to small variations in the respective joint angle $\theta_i$. For instance, for each joint i, three different variations may be chosen, $\Delta\theta_{i,1}$=-0.1 rad, $\Delta\theta_{i,2}$= 0.0 rad, and $\Delta\theta_{i,3}$=+0.1 rad. A scalar value can be calculated for the accuracy index $C_{accuracy}$ on the basis of this error vector $\Delta X$, according to the following equation:

$$C_{accuracy} = \sqrt{(\Delta x^2 + \Delta y^2 + \Delta z^2)} + \Delta\alpha + \Delta\beta + \Delta\gamma$$

Consequently, this accuracy index $C_{accuracy}$ decreases with increasing accuracy of the manipulator, that is, decreasing positional sensitivity of the end-effector to changes in the joint positions.

The energy index $C_{energy}$ is based on the instantaneous joint speeds for all manipulator axes along said optimal path. For an infinitely redundant multi-axis manipulator with m rotational axes in series, it can be calculated as the average of the absolute values of the angular speeds $\dot{\theta}_i$ of the axes i=1 to n, according to the following equation:

$$C_{energy} = \frac{\sum_{i=1}^{m} |\dot{\theta}_i|}{m}$$

Consequently, this energy index $C_{energy}$ reflects the speed of the joints at each point in the optimal path. Both the accuracy index $C_{accuracy}$ and the energy index $C_{energy}$ will spike near a singularity in joint space. Therefore, both these indexes, or either one of them, may be used to validate said optimal path, for instance by setting maximum thresholds for each index, or a single threshold for a sum of both indexes.

Those skilled in the art will recognize that the present invention may be manifested in a variety of forms other than the specific embodiment described and contemplated herein. Accordingly, departure in form and detail may be made without departing from the scope of the present invention as described in the appended claims.

**Claims**

1. An imitation learning method for a multi-axis manipulator (7'), wherein said multi-axis manipulator (7') is infinitely redundant in a Cartesian space, the method carried out by a computing device comprising the steps of :

   capturing, at a set of successive waypoints (10,11) in a teach-in trajectory (4) of a user-operated training tool, spatial data comprising position and orientation of the training tool (3) in said Cartesian space ;
   selecting, from among said set of successive waypoints (10,11), a subset of waypoints (11) starting from a first waypoint (11) of said set of successive waypoints (10,11), wherein for each subsequent waypoint (11) to be selected a difference in position and/or orientation with respect to a last previously selected waypoint (11) exceeds a predetermined threshold;
   fitting a set trajectory (4') in said Cartesian space to said selected subset of waypoints (11) ; and
   converting said set trajectory into motion commands in a joint space of said multi-axis manipulator (7'), wherein an optimal path (15) of redundant joint positions maximizing Yoshikawa index values for the multi-axis manipulator (7') along the set trajectory (4') is calculated by:

      selecting a plurality of alternative initial redundant joint positions (13) for a first waypoint (11) in said set trajectory (4') ;
      calculating, for each one of said alternative initial redundant joint positions (13), a path (12) of successive redundant joint positions by selecting, for each successive waypoint (11) in the set trajectory (4'), the redundant joint position resulting in the highest Yoshikawa index value for the multi-axis manipulator (7') and complying with predetermined speed and/or acceleration limits with respect to the previous redundant joint position in the same path (12) of successive redundant joint positions ;

interpolating, between said paths (12) of successive redundant joint positions, a plurality of polynomial redundant joint trajectories (14) ; and

extracting said optimal path (15) from redundant joint positions in said plurality of polynomial redundant joint trajectories (14).

2. An imitation learning method according to claim 1, wherein said optimal path (15) is extracted using an optimization algorithm.

3. An imitation learning method according to any one of claims 1 or 2, wherein said optimal path (15) is validated using an accuracy index corresponding to a ratio of Cartesian space to joint space variation along said optimal path.

4. An imitation learning method according to any one of claims 1 to 3, wherein said optimal path (15) is validated using an energy index corresponding to joint speeds in joint space along said optimal path.

5. An imitation learning method according to any one of the previous claims, wherein said spatial data are captured through an optical sensor (5).

6. An imitation learning method according to claim 5, wherein said optical sensor (5) is a stereoscopic sensor.

7. An imitation learning method according to any one of the previous claims, wherein said user-operated training tool (3) carries at least a first marker (M) and two additional markers (M) spaced along different axes from said first marker (M).

8. An imitation learning method according to any one of claims 1 to 4, wherein said user-operated training tool (3) is carried by a multi-axis manipulator, a manual operation of the training tool being servo-assisted by the multi-axis manipulator carrying the user-operated training tool (3), and said spatial data being captured through joint position sensors of the multi-axis manipulator carrying the user-operated training tool.

9. An imitation learning method according to any one of the previous claims, wherein said motion commands are transmitted to a multi-axis manipulator (7') in real time.

10. A computer program comprising an instruction set which, when the program is executed by a computing device, cause the computing device to carry out the imitation learning method according to any one of the previous claims.

11. A computer-readable data storage medium containing an instruction set comprising instructions which, when executed by a computing device, cause the computing device to carry out the imitation learning method according to any one of claims 1 to 9.

12. A computing device (6) programmed with an instruction set for carrying out an imitation learning method according to any one of claims 1 to 9.

13. A robotic system comprising a multi-axis manipulator (7') and a computing device (6) according to claim 12.

**Patentansprüche**

1. Imitationslernverfahren für einen Mehrachsenmanipulator (7'), wobei der Mehrachsenmanipulator (7') in einem kartesischen Raum unendlich redundant ist, wobei das Verfahren durch eine Rechenvorrichtung ausgeführt wird und diese Schritte umfasst:

Erfassen, an einem Satz aufeinanderfolgender Wegpunkte (10, 11) in einer Anlerntrajektorie (4) eines durch einen Nutzer bedienten Trainingswerkzeugs, von räumlichen Daten, die Position und Orientierung des Trainingswerkzeugs (3) in dem kartesischen Raum umfassen,

Auswählen, aus dem Satz aufeinanderfolgender Wegpunkte (10, 11), einer Teilmenge von Wegpunkten (11), beginnend an einem ersten Wegpunkt (11) des Satzes aufeinanderfolgender Wegpunkte (10, 11), wobei für jeden anschließenden auszuwählenden Wegpunkt (11) eine Differenz in Position und/oder Orientierung mit Bezug auf einen letzten zuvor ausgewählten Wegpunkt (11) eine vorgegebene Schwelle übersteigt,

Anpassen einer eingestellten Trajektorie (4') in dem kartesischen Raum an die ausgewählte Teilmenge von Wegpunkten (11), und

Konvertieren der eingestellten Trajektorie in Bewegungsbefehle in einem Gelenkraum des Mehrachsenmanipulators (7'), wobei ein optimaler Pfad (15) von redundanten Gelenkstellungen, die Yoshikawa-Indexwerte für den Mehrachsenmanipulator (7') entlang der eingestellten Trajektorie (4') maximieren, berechnet wird durch:

Auswählen mehrerer alternativer anfänglicher redundanter Gelenkstellungen (13) für einen ersten Wegpunkt (11) in der eingestellten Trajektorie (4'),

Berechnen, für jede der alternativen anfänglichen redundanten Gelenkstellungen (13), eines Pfades (12) aufeinanderfolgender redundanter Gelenkstellungendurch Auswählen, für jeden anschließenden Wegpunkt (11) in der eingestellten Trajektorie (4'), der redundanten Gelenkstellungen, die zum höchsten Yoshikawa-Indexwert für den Mehrachsenmanipulator (7') führt, und Einhalten vorgegebener Geschwindigkeits- und/oder Beschleunigungsgrenzen mit Bezug auf die vorherige redundante Gelenkstellungenim selben Pfad (12) aufeinanderfolgender redundanter gemeinsamer Positionen,

Interpolieren, zwischen den Pfaden (12) aufeinanderfolgender redundanter Gelenkstellungen, mehrerer polynomer redundanter Gelenktrajektorien (14), und

Extrahieren des optimalen Pfades (15) aus redundanten Gelenkstellungen in den mehreren polynomen redundanten gemeinsamen Trajektorien (14).

2. Imitationslernverfahren nach Anspruch 1, wobei der optimale Pfad (15) unter Verwendung eines Optimierungsalgorithmus extrahiert wird.

3. Imitationslernverfahren nach einem der Ansprüche 1 und 2, wobei der optimale Pfad (15) unter Verwendung eines Genauigkeitsindex validiert wird, der einem Verhältnis einer Kartesischer-Raum-zu-Gelenkraum-Variation entlang des optimalen Pfades entspricht.

4. Imitationslernverfahren nach einem der Ansprüche 1 bis 3, wobei der optimale Pfad (15) unter Verwendung eines Energie-Index validiert wird, der Gelenkgeschwindigkeiten im Gelenkraum entlang des optimalen Pfades entspricht.

5. Imitationslernverfahren nach einem der vorangehenden Ansprüche, wobei die räumlichen Daten durch einen optischen Sensor (5) erfasst werden.

6. Imitationslernverfahren nach Anspruch 5, wobei der optische Sensor (5) ein stereoskopischer Sensor ist.

7. Imitationslernverfahren nach einem der vorangehenden Ansprüche, wobei das durch einen Nutzer bediente Trainingswerkzeug (3) mindestens einen ersten Marker (M) und zwei zusätzliche Marker (M) trägt, die entlang verschiedener Achsen des ersten Markers (M) beabstandet sind.

8. Imitationslernverfahren nach einem der Ansprüche 1 bis 4, wobei das durch einen Nutzer bediente Trainingswerkzeug (3) durch einen Mehrachsenmanipulator getragen wird, wobei eine manuelle Betätigung des Trainingswerkzeugs durch den Mehrachsenmanipulator servounterstützt wird, der das durch einen Nutzer bediente Trainingswerkzeug (3) trägt, und die räumlichen Daten durch gemeinsame Positionssensoren des Mehrachsenmanipulators erfasst werden, der das durch einen Nutzer bediente Trainingswerkzeug trägt.

9. Imitationslernverfahren nach einem der vorangehenden Ansprüche, wobei die Bewegungsbefehle zu einem Mehrachsenmanipulator (7') in Echtzeit gesendet werden.

10. Computerprogramm, das einen Instruktionssatz umfasst, der, wenn das Programm durch eine Rechenvorrichtung ausgeführt wird, die Rechenvorrichtung veranlasst, das Imitationslernverfahren nach einem der vorangehenden Ansprüche auszuführen.

11. Computerlesbares Datenspeichermedium, das einen Instruktionssatz enthält, der Instruktionen umfasst, die, wenn sie durch eine Rechenvorrichtung ausgeführt werden, die Rechenvorrichtung veranlassen, das Imitationslernverfahren nach einem der Ansprüche 1 bis 9 auszuführen.

12. Rechenvorrichtung (6), die mit einem Instruktionssatz zum Ausführen des Imitationslernverfahrens nach einem der Ansprüche 1 bis 9 programmiert ist.

**13.** Robotisches System, das einen Mehrachsenmanipulator (7') und eine Rechenvorrichtung (6) nach Anspruch 12 umfasst.

**Revendications**

**1.** Procédé d'apprentissage par imitation pour manipulateur multiaxe (7') dans lequel ledit manipulateur multiaxe (7') est redondant à l'infini dans un espace cartésien, le procédé réalisé par un dispositif informatique comprenant les étapes consistant :

à capturer, au niveau d'un ensemble de points de cheminement successifs (10, 11) dans une trajectoire d'apprentissage (4') d'un outil d'entraînement manoeuvré par utilisateur, des données spatiales comprenant une position et une orientation de l'outil d'entraînement (3) dans ledit espace cartésien ;
à sélectionner, parmi ledit ensemble de points de cheminement successifs (10, 11), un sous-ensemble de points de cheminement (11) commençant à partir d'un premier point de cheminement (11) dudit ensemble de points de cheminement successifs (10, 11), dans lequel pour chaque point de cheminement suivant (11) devant être sélectionné une différence dans une position et/ou une orientation par rapport à un dernier point de cheminement sélectionné précédemment (11) dépasse un seuil prédéterminé ;
à ajuster une trajectoire d'ensemble (4') dans ledit espace cartésien par rapport audit sous-ensemble sélectionné de points de cheminement (11) ; et
à convertir ladite trajectoire d'ensemble en commandes de mouvement dans un espace articulaire dudit manipulateur multiaxe (7'), dans lequel un chemin optimal (15) de positions articulaires redondantes maximisant des valeurs d'indice de Yoshikawa pour le manipulateur multiaxe (7') le long de la trajectoire d'ensemble (4') est calculé :

en sélectionnant une pluralité de positions articulaires redondantes initiales alternatives (13) pour un premier point de cheminement (11) dans ladite trajectoire d'ensemble (4') ;
en calculant, pour chacune desdites positions articulaires redondantes initiales alternatives (13), un chemin (12) de positions articulaires redondantes successives en sélectionnant, pour chaque point de cheminement successif (11) dans la trajectoire d'ensemble (4'), la position articulaire redondante se traduisant par la plus haute valeur d'indice de Yoshikawa pour le manipulateur multiaxe (7') et en respectant les limites prédéterminées de vitesse et/ou d'accélération par rapport à la position articulaire redondante précédente dans le même chemin (12) que des positions articulaires redondantes successives ;
en interpolant, entre lesdits chemins (12) de positions articulaires redondantes successives, une pluralité de trajectoires articulaires redondantes polynomiales (14) ; et
en extrayant ledit chemin optimal (15) à partir de positions articulaires redondantes dans ladite pluralité de trajectoires articulaires redondantes polynomiales (14).

**2.** Procédé d'apprentissage par imitation selon la revendication 1, dans lequel ledit chemin optimal (15) est extrait en utilisant un algorithme d'optimisation.

**3.** Procédé d'apprentissage par imitation selon l'une quelconque des revendications 1 ou 2, dans lequel ledit chemin optimal (15) est validé en utilisant un indice de précision correspondant à un rapport de l'espace cartésien sur une variation d'espace articulaire le long dudit chemin optimal.

**4.** Procédé d'apprentissage par imitation selon l'une quelconque des revendications 1 à 3, dans lequel ledit chemin optimal (15) est validé en utilisant un indice énergétique correspondant à des vitesses articulaires dans un espace articulaire le long dudit chemin optimal.

**5.** Procédé d'apprentissage par imitation selon l'une quelconque des revendications précédentes, dans lequel lesdites données spatiales sont capturées à l'aide d'un capteur optique (5).

**6.** Procédé d'apprentissage par imitation selon la revendication 5, dans lequel ledit capteur optique (5) est un capteur stéréoscopique.

**7.** Procédé d'apprentissage par imitation selon l'une quelconque des revendications précédentes, dans lequel ledit outil d'entraînement manoeuvré par utilisateur (3) porte au moins un premier marqueur (M) et deux marqueurs supplémentaires (M) espacés le long d'axes différents par rapport audit premier marqueur (M).

**8.** Procédé d'apprentissage par imitation selon l'une quelconque des revendications 1 à 4, dans lequel ledit outil d'entraînement manoeuvré par utilisateur (3) est porté par un manipulateur multiaxe, une manoeuvre manuelle de l'outil d'entraînement étant servo-assistée par le manipulateur multiaxe portant l'outil d'entraînement manoeuvré par utilisateur (3), et lesdites données spatiales étant capturées à l'aide de capteurs de position articulaire du manipulateur multiaxe portant l'outil d'entraînement manoeuvré par utilisateur.

**9.** Procédé d'apprentissage par imitation selon l'une quelconque des revendications précédentes, dans lequel lesdites commandes de mouvement sont transmises à un manipulateur multiaxe (7') en temps réel.

**10.** Programme informatique comprenant un ensemble d'instructions qui, lorsque le programme est exécuté par un dispositif informatique, amènent le dispositif informatique à réaliser le procédé d'apprentissage par imitation selon l'une quelconque des revendications précédentes.

**11.** Support de stockage de données lisible par ordinateur contenant un ensemble d'instructions comprenant des instructions qui, lorsqu'elles sont exécutées par un dispositif informatique, amènent le dispositif informatique à réaliser le procédé d'apprentissage par imitation selon l'une quelconque des revendications 1 à 9.

**12.** Dispositif informatique (6) programmé avec un ensemble d'instructions pour réaliser un procédé d'apprentissage par imitation selon l'une quelconque des revendications 1 à 9.

**13.** Système robotique comprenant un manipulateur multiaxe (7') et un dispositif informatique (6) selon la revendication 12.

FIG.1A

FIG.1B

FIG.2

FIG.3

FIG.4

FIG.5

FIG.6A

FIG.6B

FIG.7

| SELECTING ALTERNATIVE INITIAL REDUNDANT JOINT POSITIONS | ~S801 |
| CALCULATING REDUNDANT JOINT TRAJECTORY FROM EACH INITIAL POSITION | ~S802 |
| INTERPOLATING POLYNOMIAL TRAJECTORIES | ~S803 |
| EXTRACTING OPTIMAL PATH | ~S804 |
| VALIDATING OPTIMAL PATH | ~S805 |

FIG.8

FIG.9A

FIG.9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2361735 A2